(19) Europäisches Patentamt / European Patent Office / Office européen des brevets

(11) **EP 1 186 907 B1**

(12) **FASCICULE DE BREVET EUROPEEN**

(45) Date de publication et mention
de la délivrance du brevet:
**14.12.2011 Bulletin 2011/50**

(51) Int Cl.:
*G01S 13/28* *(2006.01)*    *G01S 13/24* *(2006.01)*

(21) Numéro de dépôt: **01402275.0**

(22) Date de dépôt: **31.08.2001**

(54) **Radar à impulsions, à modulation de fréquence du type rampe, à haute résolution en distance**

Pulsradar mit geschirpter Frequenzmodulation und höher Entfernungsauflösung

Pulse radar with chirp type frequency modulation and high range resolution

(84) Etats contractants désignés:
**DE FR GB IT**

(30) Priorité: **01.09.2000 FR 0011199**

(43) Date de publication de la demande:
**13.03.2002 Bulletin 2002/11**

(73) Titulaire: **Thales**
**75008 Paris (FR)**

(72) Inventeur: **Moruzzis, Michel,**
**c/oThales - Intellectual Property**
**94117 Arcueil cedex (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 4 427 982    US-A- 6 072 420**

• **MARTH P C ET AL: "PRELAUNCH PERFORMANCE OF THE NASA ALTIMETER FOR THE TOPEX/POSEIDON PROJECT" IEEE TRANSACTIONS ON GEOSCIENCE AND REMOTE SENSING,US,IEEE INC. NEW YORK, vol. 31, no. 2, 1 mars 1993 (1993-03-01), pages 315-332, XP000382882 ISSN: 0196-2892**

**Description**

La présente invention concerne un radar à impulsions modulées en fréquence selon des rampes de modulation. Elle s'applique notamment pour l'amélioration de la résolution en distance de tels radars.

Certaines applications radar nécessitent d'analyser les cibles. La distance de cette dernière au radar étant préalablement connue, par des moyens radar connus par ailleurs, le radar effectue une analyse de la forme de la cible, dans le but par exemple d'en déterminer la nature, le nombre ou la taille. A cet effet, il est connu d'utiliser un radar à impulsions et à modulation de fréquence en forme de rampes. En d'autres termes, à l'intérieur d'une impulsion, la fréquence varie linéairement en fonction du temps d'une fréquence $f_{min}$ à une fréquence $f_{max}$.

Les impulsions radar de durée T sont ainsi modulées en fréquence selon cette loi de modulation avec une démodulation par un signal de même loi, déclenchée à un instant voisin de celui du retour de l'impulsion après réflexion sur la cible, la distance de la cible au radar étant connue. Après cette démodulation, on obtient un signal dont la fréquence est proportionnelle à la distance de la cible comptée par rapport à la distance de déclenchement de la rampe de démodulation. Quand la cible est étendue en distance, on obtient une combinaison de signaux dont la fréquence et l'instant de début sont proportionnels à la distance et l'amplitude à la réflectivité de chaque élément de la cible. Comme on s'intéresse en général à des cibles dont la longueur est faible devant celle de l'impulsion émise, il est possible de filtrer, d'échantillonner et coder à bande étroite le signal obtenu. Le profil distance d'une cible peut alors être reconstitué par une analyse spectrale du signal ainsi échantillonné. Une cible comportant plusieurs éléments ayant des distances différentes au radar, chaque élément réfléchit un signal de fréquence différente et proportionnelle à la distance de l'élément. On peut ainsi reconnaître notamment la nature d'une cible.

La résolution en distance r obtenue est inversement proportionnelle à la largeur de la bande de fréquences émise B, B étant égale à $f_{max}$ - $f_{min}$. Cette résolution r est donnée par la relation suivante :

$$r = \alpha \frac{c}{2B} \tag{1}$$

où c représente la célérité de la lumière et où $\alpha$ est un coefficient dépendant du type d'analyse spectrale utilisée. Dans le cas où cette analyse est une transformée de Fourier pondérée $\alpha$ est égal à 1. Pour une pondération de Hamming, $\alpha$ est sensiblement égal à 1,3 alors que pour une analyse à haute résolution $\alpha$ peut être inférieur à 1.

Pour certaines applications, cette résolution r peut être insuffisante. La relation (1) montre que celle-ci est limitée par la bande de modulation B. A titre d'exemple, pour des radars classiques capables de passer une bande B égale à 50 Mhz dans une impulsion, la résolution donnée par la relation (1) est de l'ordre de 3 mètres.

Il est possible d'améliorer cette résolution, c'est-à-dire de descendre au-dessous du mètre par exemple, en passant une bande B nettement supérieure à 50 Mhz à l'intérieur d'une impulsion. Cependant une telle solution est chère et complexe à mettre en oeuvre. Elle complique notamment de façon très significative les circuits d'émission et de réception du radar. Une autre solution permettant d'améliorer la résolution distance pourrait utiliser des techniques de type « bande synthétique » en envoyant plusieurs impulsions à bande étroite. Néanmoins, la détermination de distance se fait au prix d'un long temps de pose qui peut être incompatible de certaines applications, par exemple des applications de veille panoramique.

Un document US 4 427 982 décrit un dispositif radar large bande réduisant les échos de clutter émettant des impulsions radar décorrélant spatialement le clutter, avec un saut de fréquence d'une impulsion à l'autre fonction de la différence de fréquence de décorrélation du clutter.

Un but de l'invention est de pallier les inconvénients précités, en permettant notamment d'améliorer la résolution distance de façon économique. A cet effet, l'invention a pour objet un radar à impulsions tel que décrit par les revendications.

L'invention a pour principaux avantages qu'elle peut être appliquée sans modification matérielle de radars existants, qu'elle permet une détermination de distance de façon quasi-instantanée et qu'elle est simple à mettre en oeuvre.

D'autres caractéristiques et avantages de l'invention apparaîtront à l'aide de la description qui suit faite en regard de dessins annexés qui représentent :

-    la figure 1, une rampe de modulation de fréquence appliquée à un radar à impulsions ;
-    la figure 2, des rampes de modulations de fréquence appliquées dans un radar selon l'invention ;
-    la figure 3, par un synoptique, un mode de réalisation possible de moyens de traitements des signaux reçus dans le radar selon l'invention ;

- la figure 4, une illustration de la fonction de concaténation appliquée aux signaux de réception élémentaires échantillonnés.

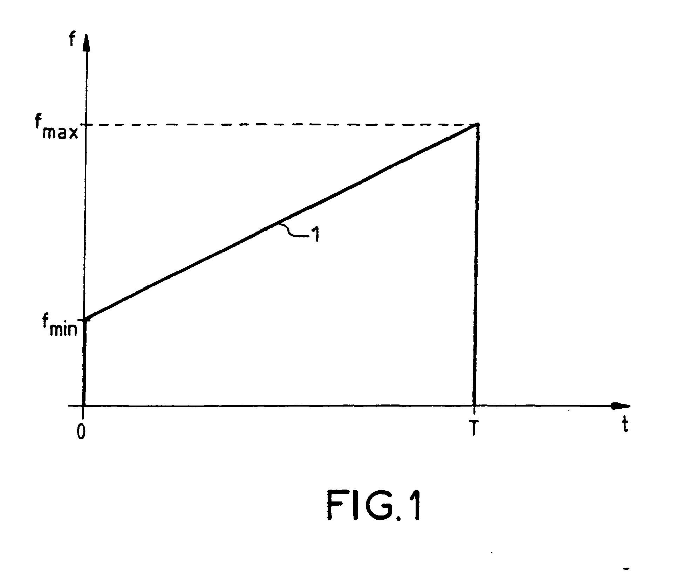

La figure 1 présente une rampe de modulation de fréquence 1 appliquée à un radar à impulsions. Le radar émet une onde hyperfréquence dans au moins un intervalle de temps T. Durant cette impulsion, la fréquence f du signal émis vers une cible varie linéairement en fonction du temps t d'une fréquence $f_{min}$ à une fréquence $f_{max}$. Le signal réfléchi par la cible est démodulé par un signal de même loi de modulation. La démodulation est déclenchée à un instant voisin de celui du retour de l'impulsion après réflexion sur la cible. Cet instant peut être connu puisque la distance de la cible au radar est par ailleurs connue, au moyen d'une autre fonction radar mais sans résolution particulière. Après cette démodulation, on obtient au niveau des circuits de réception du radar un signal dont la fréquence est proportionnelle à la distance du point de réflexion sur la cible. La résolution en distance obtenue est donnée par la relation (1).

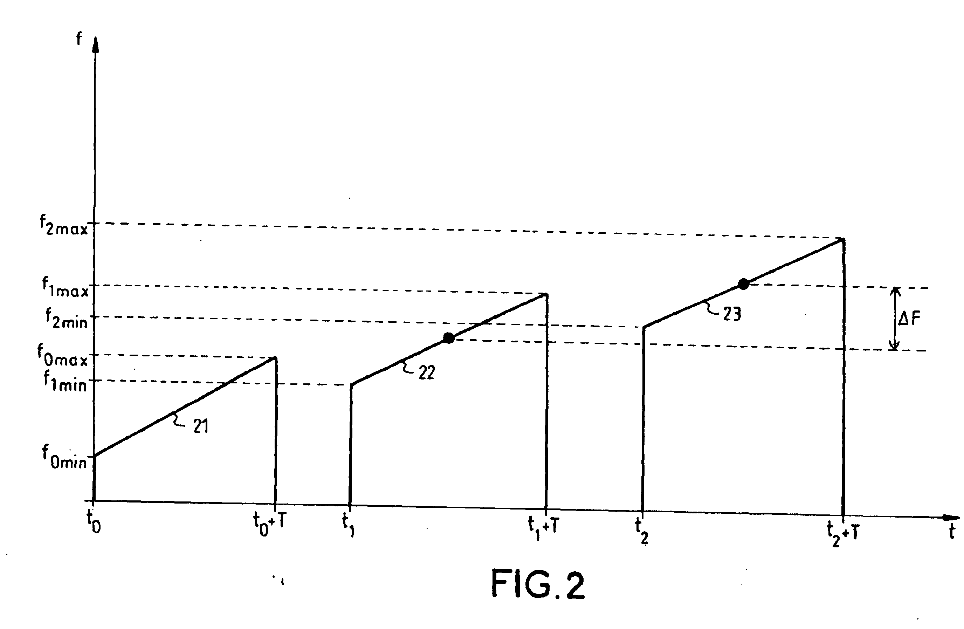

La figure 2 illustre un exemple de forme d'onde émise par un radar selon l'invention, permettant notamment d'obtenir une résolution en distance meilleure que la précédente. Pour déterminer la distance, l'onde émise par le radar comporte N impulsions consécutives. Chacune de ces impulsions est générée de la même manière que celle illustrée par la figure 1, c'est-à-dire avec la même durée T. Mais la fréquence centrale du signal émis varie d'une impulsion à l'autre. La figure 2 présente à titre d'exemple un cas où le nombre d'impulsions N est égale à 3. Cette figure ne présente pas la forme d'onde proprement dite mais sa modulation de fréquence associée représentée par des rampes 21, 22, 23 décalées en fréquence. Une première impulsion de durée T est envoyée à un instant $t_0$. La fréquence du signal de l'impulsion croît d'une fréquence $f_{0min}$ à une fréquence $f_{0max}$. Une deuxième impulsion de durée T est envoyée à un instant $t_1$. La fréquence du signal de l'impulsion croît d'une fréquence $f_{1min}$ à une fréquence $f_{1max}$. Une troisième impulsion de durée T est envoyée à un instant $t_2$. La fréquence du signal de l'impulsion croît d'une fréquence $f_{2min}$ à une fréquence $f_{2max}$. La largeur B de bande de modulation est par exemple la même pour chaque impulsion, ainsi :

$$B = f_{0max} - f_{0min} = f_{1max} - f_{1min} = f_{2max} - f_{2min} \qquad (2)$$

Les fréquences centrales des rampes sont par exemple décalées d'une quantité $\Delta F$ d'une impulsion à l'autre. En particulier :

$$\frac{f_{2\,max} + f_{2\,min}}{2} - \frac{f_{1\,max} + f_{1\,min}}{2} = \frac{f_{1\,max} + f_{1\,min}}{2} - \frac{f_{0\,max} + f_{0\,min}}{2} = \Delta F \qquad (3)$$

A la réception de chaque impulsion, le radar traite cette impulsion comme des impulsions classiques, chaque impulsion étant démodulée par sa rampe correspondante. Puis le radar met en mémoire les échantillons de chaque impulsion reçue et démodulée, après codage. L'analyse fréquentielle du profil distance de la cible se fait ensuite sur l'ensemble des échantillons des N signaux après concaténation de ceux-ci, la distance étant proportionnelle à la fréquence du signal global représenté par l'ensemble des échantillons.

Il est possible de se satisfaire d'un codage à bande étroite dans la mesure où la profondeur en distance de la cible est limitée. En particulier, si on s'intéresse à l'analyse d'une profondeur de distance dp, avec une forme d'onde de durée T et de bande de largeur B, on peut échantillonner le signal, après démodulation, à une fréquence $f_s$ donnée par la relation suivante :

$$f_s = \frac{2Bd_p}{cT} \qquad (4)$$

A titre d'exemple, pour une profondeur dp = 500 mètres, une impulsion de durée T = 100$\mu$s et une largeur de bande B = 150 Mhz, le radar peut échantillonner le signal à la fréquence $f_s$ = 5 Mhz. Un codage à bande étroite permet notamment d'utiliser des codeurs classiques, sans performances particulières au niveau de la rapidité.

Une fois que les N impulsions échantillonnées sont ainsi mémorisées, le radar effectue un traitement pour notamment déterminer la distance.

De manière à garantir la cohérence des signaux et le bon fonctionnement du radar en présence notamment :

- du déplacement de la cible lors de l'émission de la forme d'onde, c'est-à-dire de la migration distance ;
- d'éventuels sauts de phase d'impulsion à impulsion dus à la génération des signaux radar,

il y a de préférence un certain recouvrement des spectres émis. En d'autres termes, dans le cas par exemple d'une onde telle qu'illustrée par la figure 2, $f_{1min}$ est inférieur à $f_{0max}$ et $f_{2min}$ est inférieur à $f_{1max}$. Ce qui s'exprime notamment par la relation suivante :

$$\Delta F = \beta.B \qquad\qquad \text{avec } \beta < 1 \qquad\qquad (5)$$

Si la cible se déplace, la loi de phase du signal reçu est différente d'une impulsion à l'autre. Pour assurer la cohérence des signaux, il faut donc compenser cette variation de phase. Cette compensation se déduit de façon connue de la connaissance de la vitesse de la cible. Le recouvrement des fréquences [$f_{1min}$, $f_{0max}$], [$f_{2min}$, $f_{1max}$] permet de déterminer cette vitesse. En particulier, l'intervalle de fréquence [$f_{1min}$, $f_{0max}$] appartient à la première et à la deuxième impulsions. Dans chacune de ces impulsions, le radar détermine de façon classique un spectre distance pour cet intervalle [$f_{1min}$, $f_{0max}$], c'est-à-dire un ensemble de fréquences représentatives de distances d'éléments de la cible. Etant donné que le signal est le même, un même profil distance est obtenu, mais avec une différence de distance entre les réponses des deux impulsions successives. Etant donné que le radar connaît le temps écoulé entre deux impulsions, il peut alors en déduire la vitesse. Le recouvrement des bandes de modulation est donc un moyen de compenser les différences de phase dues au déplacement de la cible.

La largeur de bande totale $B_T$ exploitable est donnée par la relation suivante :

$$B = (1+(N-1)\beta)B = \rho B \qquad\qquad (6)$$

En conservant le même type d'analyse que précédemment, la résolution en distance $r_T$ correspondante devient donc :

$$r_T = \alpha \frac{c}{2B_T} = \frac{r}{\rho} \qquad\qquad (7)$$

r étant la résolution telle que définie par la relation (1).

La grandeur $\rho$ étant supérieure à 1, la résolution en distance est donc améliorée. A titre d'exemple, pour un radar ayant la capacité d'émettre six impulsions avec une largeur de bande B = 50 Mhz, avec $\beta$ = 0,85 et une analyse avec pondération de Hamming, le radar peut obtenir une résolution distance $r_T$ = 0,75 mètre au lieu d'une résolution r = 3,9 mètres.

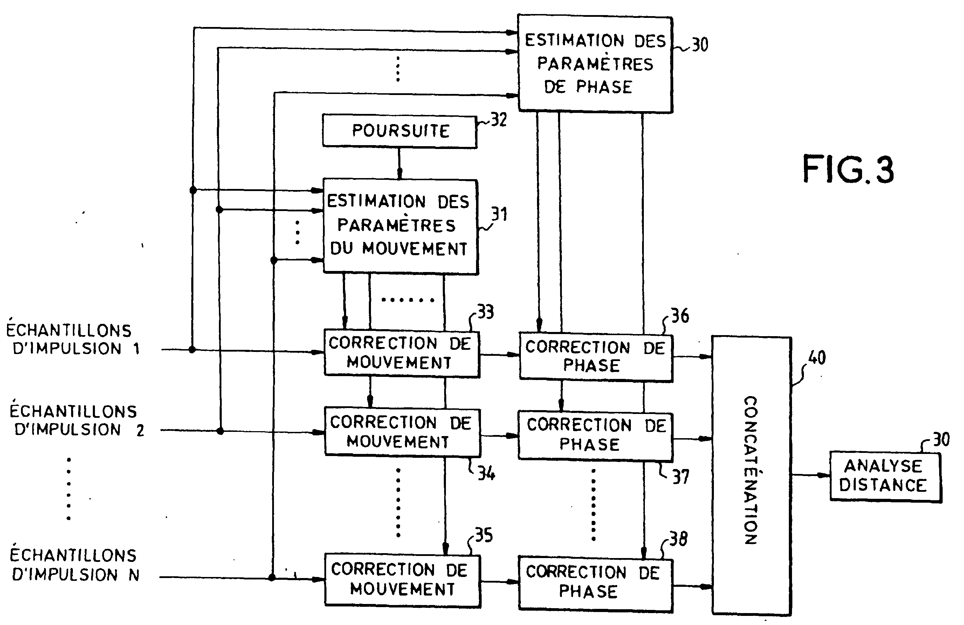

La figure 3 présente un exemple de moyens de traitements pour l'analyse de la distance à partir des signaux de réception correspondant à un même train d'impulsions. Le radar analyse en effet le profil distance d'une cible à partir d'un train de N impulsions. Chaque signal d'impulsion réfléchi par la cible est démodulé par sa rampe correspondante par des moyens de réception classiques. Les rampes sont décalées en fréquence d'une impulsion à l'autre comme l'illustre notamment la figure 2. Chaque signal élémentaire reçu et démodulé, correspondant à une impulsion, est échantillonné puis codé par des moyens de codage. Les échantillons sont ensuite mémorisés. Les échantillons d'impulsion 1, 2, ...N représentés en entrée des moyens de traitement de la figure 3 sont ces signaux échantillonnés et mémorisés, correspondant respectivement à la première, à la deuxième et à la N$^{ème}$ impulsion du train.

Les moyens de traitement de la figure 3 comportent des moyens 31 d'estimation des paramètres de mouvements de la cible, notamment la vitesse. Ces moyens d'estimations 31 opèrent par exemple à partir de moyens de poursuites 32 de la cible présents par ailleurs dans le radar. Ces moyens de poursuite permettent en particulier de déterminer la vitesse de la cible. Les moyens 31 d'estimation des paramètres de mouvement sont reliés aux moyens de mémorisation, non représentés, des échantillons de signaux reçus. Ils prennent donc en compte les échantillons d'impulsion 1, 2, ...N. Des moyens de correction de mouvement 33, 34, 35 sont associés à chaque ensemble d'échantillons d'une impulsion 1, 2, ...N. A partir des moyens 31 d'estimation des paramètres de mouvement, les moyens de correction de mouvement compensent les différences de phases dues aux mouvements de la cible, notamment à sa vitesse. Cette compensation est par exemple effectuée comme indiquée précédemment au moyen des recouvrements de bandes de modulation. Les moyens de correction 33, 34, 35 modifient la valeur des échantillons de façon à produire la compensation nécessaire.

Les moyens de traitement comportent par exemple des moyens de correction de phase 36, 37, 38, associés à chaque ensemble d'échantillon d'impulsion 1, 2, ...N, pour corriger des sauts de phases qui ne sont pas dus aux mouvements de la cible. En particulier, il peut y avoir, même en l'absence de mouvements de la cible, notamment des sauts de phase aléatoire d'une impulsion à l'autre. Les moyens de traitement comportent donc des moyens 39 d'estimation des paramètres de phase reliés aux moyens de mémorisation des échantillons. Les moyens de correction de phase 36, 37, 38 sont par exemple placés à la suite des moyens de correction de mouvement 33, 34, 35. A partir des données fournies par les moyens d'estimation des paramètres de phase relatifs à chaque impulsion 1, 2, ...N, ils modifient les échantillons, par exemple issus des moyens de correction de mouvement, pour compenser les sauts de phases.

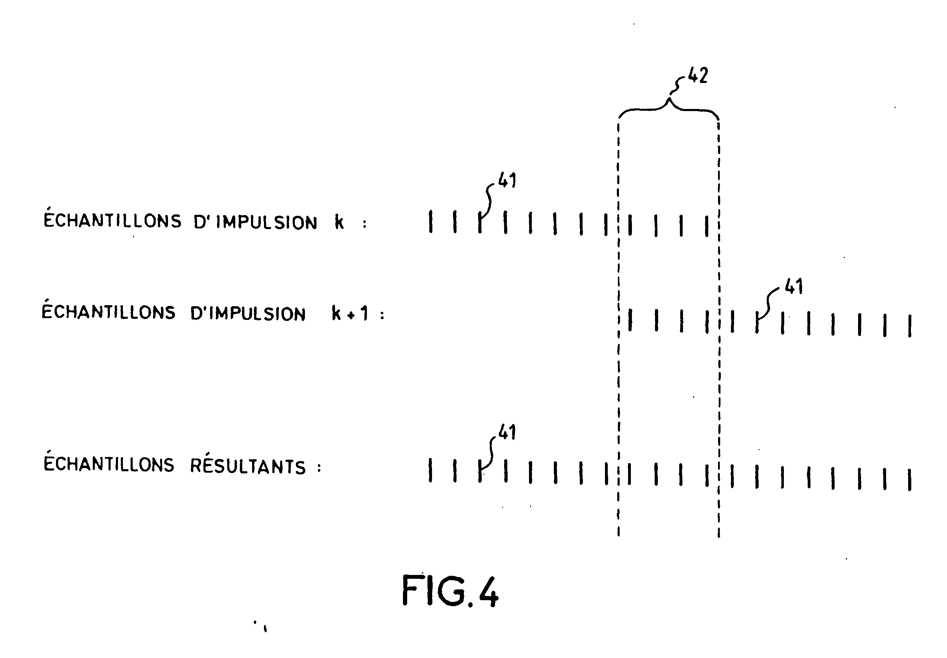

Les échantillons corrigés sont ensuite traités par des moyens de concaténation 40. Ces moyens réalisent l'enchaînement des échantillons pour former un signal échantillonné global correspondant à l'ensemble de N impulsions. La figure 4 illustre en partie la fonction de ces moyens de concaténation 40 appliquée à l'enchaînement de deux signaux élémentaires échantillonnés consécutifs d'ordres k et k+1. Ces signaux sont constitués d'échantillons 41. En raison des recouvrements de bandes [$f_{1min}$, $f_{0max}$], [$f_{2min}$, $f_{1max}$], des échantillons 42 sont communs aux deux signaux k et k+1. Par concaténation, le signal résultant ne comporte qu'une seule fois les échantillons 42 communs aux deux bandes. Le signal global échantillonné fourni par les moyens de concaténation est ensuite fourni à des moyens 30 d'analyse de distance classiques.

Un avantage de l'invention est notamment qu'elle permet d'améliorer la résolution distance de radars à impulsion modulés en fréquence par des rampes sans modification substantielle du matériel. Cette amélioration ne coûte pratiquement rien en ce qui concerne le matériel. Les seules adaptations concernent le traitement. L'invention peut donc avantageusement être appliquée à des radars existant sans modification matérielle de ces derniers.

## Revendications

1. Radar à impulsions analysant le profil distance d'une cible à partir d'un train de N impulsions émises vers cette cible, le signal de chaque impulsion étant modulé en fréquence selon une rampe (21, 22, 23), les rampes étant décalées en fréquence d'une impulsion à l'autre, **caractérisé en ce que** chaque signal d'impulsion réfléchi par la cible est démodulé par sa rampe correspondante puis échantillonné, ledit radar comportant :

   - des moyens de concaténation (40) des signaux échantillonnés (41), ces moyens de concaténation réalisant l'enchaînement des échantillons (41) pour former un signal échantillonné global correspondant à l'ensemble des N impulsions ;
   - des moyens d'analyse (30) effectuant l'analyse de la distance par analyse spectrale du signal représenté par la suite d'échantillons obtenue par concaténation (40) des N signaux échantillonnés.

2. Radar selon la revendication 1, **caractérisé en ce que** les N impulsions ont la même durée T et leurs rampes de modulations de fréquence (21, 22, 23) ont la même largeur de bande.

3. Radar selon l'une quelconque des revendications précédentes, **caractérisé en ce que** les rampes sont décalées d'une même quantité ΔF d'une impulsion à l'autre.

4. Radar selon l'une quelconque des revendications précédentes, **caractérisée en ce que** les bandes de modulations se recouvrent d'une impulsion à l'autre ([$f_{1min}$, $f_{0max}$], [$f_{2min}$, $f_{1max}$]).

5. Radar selon l'une quelconque des revendications précédentes, **caractérisé en ce qu'**il comporte des moyens (31, 33, 34, 35) pour compenser les différences de phases d'une impulsion à l'autre dues aux mouvements de la cible, ces moyens modifiant la valeur des échantillons (41).

6. Radar selon les revendications 4 et 5, **caractérisé en ce que** la compensation est effectuée au moyen des recouvrements de bande ([$f_{1min}$, $f_{0max}$], [$f_{2min}$, $f_{1max}$]), le radar déterminant un spectre distance pour un intervalle de recouvrement commun à deux impulsions consécutives, un même profil distance étant obtenu pour les deux impulsions avec une différence de distance entre les réponses, la vitesse de la cible étant définie par connaissance du temps écoulé entre deux impulsions, la compensation de phase étant déduite de la vitesse de la cible.

7. Radar selon l'une quelconque des revendications précédentes, **caractérisé en ce qu'**il comporte des moyens (30, 36, 37, 38) pour compenser les différences de phases aléatoires d'une impulsion à l'autre, ces moyens modifiant la valeur des échantillons.

**Claims**

1. Pulsed radar analysing the range profile of a target from a train of N pulses transmitted to this target, the signal or each pulse being frequency modulated according to a ramp (21, 22, 23), the ramps being frequency-shifted from one pulse to another, **characterised by** the fact that each pulse signal reflected by the target being demodulated by its corresponding ramp then sampled, said radar comprises:

   - concatenation means (40) of sampled signals (41), said concatenation means realising the series of sampled (41) in order to form a global sampled signal corresponding to N pulses;
   - analysis means (30) carring out the distance analysis by spectral analysis of the signal represented by the series of samples obtained by concatenation (40) of the N sampled signals.

2. Radar according to claim 1, **characterised by** the fact that the N pulses have the same duration T and their frequency modulation ramps (21, 22, 23) have the same bandwidth.

3. Radar according to any one of the previous claims, **characterised by** the fact that the ramps are shifted by the same quantity $\Delta F$ from one pulse to another.

4. Radar according to any one of the previous claims, **characterised by** the fact that the modulation bands overlap from one pulse to another ($[f_{1min}, f_{0max}]$, $[f_{2min}, f_{1max}]$).

5. Radar according to any one of the previous claims, **characterised by** the fact that it includes means (31, 33, 34, 35) to compensate for the phase differences from one pulse to another due to movements of the target, these means modifying the value of the samples (41).

6. Radar according to claims 4 and 5, **characterised by** the fact that the compensation is carried out by means of band overlapping ($[f_{1min}, f_{0max}]$, $[f_{2min}, f_{1max}]$), the radar determining a range spectrum for an overlap interval that is common to two consecutive pulses, the same range profile being obtained for the two pulses with a range difference between the responses, the speed of the target being defined by knowing the time passed between two pulses, the phase compensation being deduced from the speed of the target.

7. Radar according to any one of the previous claims, **characterised by** the fact that it includes means (30, 36, 37, 38) to compensate for the random phase differences from one pulse to another, these means modifying the value of the samples.
   The present invention concerns a frequency modulated pulse radar based on modulation ramps.
   The radar analyses the range profile of a target from a train of N pulses transmitted to this target, the signal of each pulse being frequency modulated according to a ramp (21, 22, 23), the ramps being frequency-shifted from one pulse to another. Each pulse signal reflected by the target is demodulated by its corresponding ramp then sampled. The range analysis is carried out by spectral analysis of the signal represented by the series of samples obtained by concatenation of the N sample signals.
   The invention particularly applies to improve the range resolution of such radar.
   Figure 2.

**Patentansprüche**

1. Impulsradar zum Analysieren des Distanzprofils eines Ziels anhand einer Folge von N zu diesem Ziel gesendeten Impulsen, wobei das Signal jedes Impulses gemäß einer Rampe (21, 22, 23) frequenzmoduliert wird, wobei die Rampen von einem Impuls zum anderen frequenzversetzt sind, **dadurch gekennzeichnet, dass** jedes von dem Ziel reflektierte Impulssignal durch seine entsprechende Rampe demoduliert und dann abgetastet wird, wobei das Radar Folgendes umfasst:

   - Mittel (40) zum Verketten der abgetasteten Signale (41), wobei diese Verkettungsmittel die Abtastwerte (41) verknüpfen, um ein globales abgetastetes Signal zu bilden, das der Gesamtheit der N Impulse entspricht;

- Analysemittel (30) zum Durchführen einer Analyse der Distanz durch eine Spektralanalyse des Signals, das durch die durch Verketten (40) der N abgetasteten Signale erhaltene Abtastprobenfolge repräsentiert wird.

2. Radar nach Anspruch 1, **dadurch gekennzeichnet, dass** die N Impulse dieselbe Dauer T haben und ihre Frequenzmodulationsrampen (21, 22, 23) dieselbe Bandbreite haben.

3. Radar nach einem der vorherigen Ansprüche, **dadurch gekennzeichnet, dass** die Rampen um denselben Betrag ΔF von einem Impuls zum anderen versetzt sind.

4. Radar nach einem der vorherigen Ansprüche, **dadurch gekennzeichnet, dass** sich die Modulationsbänder von einem Impuls zum anderen überlappen ($[f_{1min}, f_{0max}]$, $[f_{2min}, f_{1max}]$).

5. Radar nach einem der vorherigen Ansprüche, **dadurch gekennzeichnet, dass** es Mittel (31, 33, 34, 35) zum Kompensieren der Phasendifferenzen von einem Impuls zum anderen aufgrund der Bewegungen des Ziels umfasst, wobei diese Mittel den Wert der Abtastproben (41) modifizieren.

6. Radar nach einem der Ansprüche 4 und 5, **dadurch gekennzeichnet, dass** die Kompensation mittels der Bandüberlappungen ($[f_{1min}, f_{0max}]$, $[f_{2min}, f_{1max}]$) erfolgen, wobei das Radar ein Distanzspektrum für ein Überlappungsintervall ermittelt, das zwei aufeinander folgenden Impulsen gemeinsam ist, wobei ein gleiches Distanzprofil für die beiden Impulse mit einer Distanzdifferenz zwischen den Antworten erhalten wird, wobei die Geschwindigkeit des Ziels durch die Kenntnis der zwischen zwei Impulsen verstrichenen Zeit definiert wird, wobei die Phasenkompensation von der Geschwindigkeit des Ziels abgeleitet wird.

7. Radar nach einem der vorherigen Ansprüche, **dadurch gekennzeichnet, dass** es Mittel (30, 36, 37, 38) zum Kompensieren der durch die Bewegungen des Ziels bedingten Phasendifferenzen von einem Impuls zum anderen umfasst, wobei diese Mittel den Wert der Abtastproben modifizieren.

FIG.1

FIG.2

EP 1 186 907 B1

**FIG.3**

ESTIMATION DES PARAMÈTRES DE PHASE — 30

POURSUITE — 32

ESTIMATION DES PARAMÈTRES DU MOUVEMENT — 31

ÉCHANTILLONS D'IMPULSION 1

ÉCHANTILLONS D'IMPULSION 2

ÉCHANTILLONS D'IMPULSION N

CORRECTION DE MOUVEMENT — 33

CORRECTION DE MOUVEMENT — 34

CORRECTION DE MOUVEMENT — 35

CORRECTION DE PHASE — 36

CORRECTION DE PHASE — 37

CORRECTION DE PHASE — 38

CONCATÉNATION — 40

ANALYSE DISTANCE — 30

ÉCHANTILLONS D'IMPULSION k : | | | | | | | | | | | | | | | |

ÉCHANTILLONS D'IMPULSION k+1 : | | | | | | | | | | | | | | |

ÉCHANTILLONS RÉSULTANTS : | | | | | | | | | | | | | | | | | | | | | | | | |

FIG.4

**EP 1 186 907 B1**

**Documents brevets cités dans la description**

*   US 4427982 A